# DEMANDE DE BREVET EUROPEEN

(11) **EP 4 166 308 A2**
(43) Date de publication de la demande: **19.04.2023**
(21) Numéro de dépôt: 22199401.5
(22) Date de dépôt: 03.10.2022
(51) Int. Cl.: B29C 70/10, B29C 70/88, B64D 37/02, F17C 1/12, B32B 5/08, D01D 5/24, D01F 9/00, B32B 1/02, B32B 5/02, B32B 5/12, B32B 5/26, F17C 13/00, C01B 3/00

(54) **STRUCTURE COMPOSITE POURVUE D'UN DISPOSITIF DE PROTECTION THERMIQUE À FIBRES CREUSES, EN PARTICULIER POUR UN RÉSERVOIR À HYDROGÈNE LIQUIDE**

(30) Priorité: 18.10.2021 FR 2111025
(71) Demandeur: Airbus SAS, 31700 Blagnac (FR)
(72) Inventeur: CHATEL, Sylvain, 31700 Blagnac (FR); BECHTEL, Stéphane, 31700 Blagnac (FR); PETIOT, Caroline, 31700 Blagnac (FR); MAISON, Serge, 31700 Blagnac (FR)
(74) Mandataire: Gevers & Orès

(57) **Abrégé**

- Structure composite pourvue d'un dispositif de protection thermique à fibres creuses, en particulier pour un réservoir à hydrogène liquide.
- La structure composite (1), faisant par exemple partie d'une paroi d'un réservoir à hydrogène liquide, comprend au moins un dispositif de protection thermique (2), ce dispositif de protection thermique (2) comportant une et de préférence une pluralité de fibres creuses (3) de manière à créer un protection thermique, par exemple une barrière thermique ou un échangeur thermique, qui permet de protéger la structure composite (1) notamment en cas de gradient de température élevé entre les deux faces de cette dernière, tout en bénéficiant des avantages d'un matériau composite notamment en termes de masse.

## Description

### Domaine technique

La présente invention concerne une structure composite pourvue d'un dispositif de protection thermique à fibres creuses, en particulier pour une paroi d'un réservoir à hydrogène liquide, ainsi qu'un réservoir à hydrogène liquide comprenant au moins une paroi pourvu d'une telle structure composite.

### Etat de la technique

Bien que non exclusivement, la présente invention s'applique plus particulièrement à la réalisation d'une structure composite destinée à être utilisée dans un réservoir à hydrogène liquide, par exemple un réservoir équipant un aéronef et notamment un avion de transport.

On sait que l'hydrogène à température et pression ambiantes se présente sous forme gazeuse. Cet état gazeux n'est pas adapté au stockage dans ce type d'application puisque, l'hydrogène étant peu dense, il implique de prévoir un très grand volume de réservoir ou une pression élevée pour pouvoir contenir une quantité importante d'hydrogène. Une solution pour remédier à ce problème consiste à stocker l'hydrogène à l'état liquide, en le maintenant à très basse température (à -253°C), dans un conteneur hermétiquement clos, l'hydrogène étant un composant particulièrement volatil.

Dans le cas d'un réservoir à hydrogène liquide pour un aéronef pour lequel la masse est un facteur non négligeable, il peut être envisagé d'utiliser un matériau composite au lieu d'un métal pour la paroi du réservoir. Toutefois, dans le cadre du développement d'une structure en matériau composite stratifié comprenant des fibres noyées dans une matrice, pour une paroi d'un réservoir à hydrogène liquide, la gestion du gradient de température de -253°C (20K) et à 20°C (77K), c'est-à-dire entre les températures à l'intérieur et à l'extérieur du réservoir, apparaît très délicate vis-à-vis du risque d'évaporation de l'hydrogène liquide et des fuites associées. En particulier, le gradient thermique générant un gradient de déformation par dilatation différentielle, cette dilatation différentielle va favoriser la décohésion entre les fibres et la matrice ainsi que la décohésion entre les plis du matériau composite stratifié. Ainsi, une fissuration peut s'initier par différence de coefficient de dilatation entre les fibres et la matrice, ainsi que par dilatation de la matrice. Plus précisément, des microfissures se rejoignent ou rejoignent une interface fibre/matrice et peuvent créer une fissure qui va alors se propager. Une telle fissuration peut évoluer en délaminage à l'interface entre les plis.

Ainsi, après coalescence des fissures dans le matériau composite stratifié, une fuite d'hydrogène peut s'installer d'une manière incontrôlée, ce qui présente un risque important pour la sécurité de la structure composite.

Il existe donc un besoin de disposer d'une solution permettant d'apporter une protection thermique à une structure destinée à être utilisée dans des applications dans lesquelles un gradient de température élevé est généré entre les deux faces de la structure, tout en bénéficiant des avantages d'un matériau composite notamment en termes de masse.

### Exposé de l'invention

La présente concerne une structure composite, en particulier pour une paroi d'un réservoir à hydrogène liquide, permettant de répondre à ce besoin.

Pour ce faire, selon l'invention, ladite structure composite comprend au moins un dispositif de protection thermique, et le dispositif de protection thermique comporte une ou plusieurs fibres creuses.

Ainsi, grâce à l'invention, et comme précisé davantage ci-dessous, on prévoit un dispositif de protection thermique dans la structure composite qui permet de protéger la structure composite en cas de gradient de température élevé entre les deux faces de la structure composite. De plus, comme ce dispositif de protection thermique, en particulier un échangeur thermique ou une barrière thermique, est réalisé à base de fibres creuses, il permet de faire bénéficier la structure des avantages d'un matériau composite notamment en termes de masse, et ceci de la manière précisée ci-dessous.

Ladite structure composite pourvue du dispositif de protection thermique présente de nombreux autres avantages indiqués ci-après.

Dans le cadre de la présente invention, chacune des fibres creuses du dispositif de protection thermique comprend au moins un canal interne longitudinal, creusé dans la matière de la fibre. Dans un mode de réalisation particulier, au moins certaines des fibres creuses du dispositif de protection thermique comprennent une pluralité de canaux internes longitudinaux.

Les fibres creuses du dispositif de protection thermique peuvent être obtenues de différentes manières. De préférence, au moins certaines des fibres creuses correspondent à l'un des types de fibre suivants :
- des fibres de carbone ;
- des fibres de verre ;
- des fibres thermoplastiques (polyamide, polypropylène, ...) ;
- des fibres de céramique ;
- des fibres végétales.

Dans un mode de réalisation particulier, au moins certaines des fibres creuses du dispositif de protection thermique sont des fibres courtes.

Par ailleurs, avantageusement, au moins certaines des fibres creuses du dispositif de protection thermique sont intégrées dans une matrice polymère. En variante ou en complément, un agencement d'au moins certaines fibres creuses sans intégration dans une matrice est également possible.

Par ailleurs, dans un mode de réalisation particulier, la structure composite comporte au moins une couche pourvue, à la fois, de fibres creuses telles que considérées dans la présente invention et de fibres pleines usuelles.

Dans le cadre de la présente invention, les fibres creuses du dispositif de protection thermique peuvent être agencées de différentes manières dans la structure composite. Dans un premier mode de réalisation, la structure composite comporte une pluralité de couches superposées, et au moins certaines desdites fibres creuses sont agencées dans au moins l'une de ces couches.

En outre, dans un deuxième mode de réalisation, en complément ou en variante dudit premier mode de réalisation, la structure composite comporte une pluralité de couches superposées, et au moins certaines desdites fibres creuses sont agencées entre deux couches superposées directement successives.

Par ailleurs, dans un troisième mode de réalisation, en complément ou en variante desdits premier et/ou deuxième mode de réalisation, au moins l'une des fibres creuses est agencée sur une couche externe de la structure composite.

Par ailleurs, dans une réalisation particulière, au moins l'une des fibres creuses du dispositif de protection thermique est réalisée sous forme de serpentin.

Dans le cadre de la présente invention, le ou les canaux internes des fibres creuses peuvent être utilisés différemment. Dans un premier mode de réalisation, au moins certaines des fibres creuses sont simplement remplies d'un gaz. Il peut s'agir de différents types de gaz. En particulier, dans une première réalisation, le gaz est de l'air, tandis que, dans une seconde réalisation, le gaz est un gaz neutre.

En outre, dans un deuxième mode de réalisation, en complément ou en variante dudit premier mode de réalisation, au moins certaines des fibres creuses sont traversées par un fluide caloporteur et le dispositif de protection thermique comprend au moins une unité d'alimentation configurée pour mettre en circulation le fluide caloporteur dans lesdites fibres creuses.

Par ailleurs, dans un troisième mode de réalisation, en complément ou en variante desdits premier et/ou deuxième modes de réalisation, au moins certaines des fibres creuses sont mises sous vide et le dispositif de protection thermique comprend au moins une unité de génération de vide configurée pour générer le vide dans lesdites fibres creuses.

Par ailleurs, dans un mode de réalisation particulier, au moins certaines des fibres creuses du dispositif de protection thermique comprennent un revêtement externe étanche à l'hydrogène.

La présente invention concerne également un réservoir à hydrogène liquide, en particulier pour un aéronef.

Selon l'invention, ledit réservoir à hydrogène liquide comporte au moins une partie de paroi pourvue d'une structure composite (comprenant un dispositif de protection thermique) telle que celle décrite ci-dessus.

### Brève description des figures

Les figures annexées feront bien comprendre comment l'invention peut être réalisée. Sur ces figures, des références identiques désignent des éléments semblables.
La figure 1 est une vue schématique, en perspective, d'un mode de réalisation particulier d'une structure composite de type stratifié, pourvue d'une résine polymère.
La figure 2 est une vue partielle, en perspective, d'une fibre creuse pourvue d'un unique canal interne.
La figure 3 est une vue partielle, en perspective, d'une fibre creuse pourvue d'une pluralité de canaux internes.
La figure 4 est une vue schématique, éclatée, de la structure composite de la figure 1.
La figure 5 est une vue schématique, en perspective, d'un mode de réalisation particulier d'une structure composite de type stratifié, dépourvue de résine.
La figure 6 est une vue partielle schématique, en perspective, d'un mode de réalisation particulier d'une structure composite pourvue d'une couche de fibres creuses courtes.
La figure 7 est une vue partielle schématique, en perspective, d'un mode de réalisation particulier d'une structure composite pourvue d'une couche de fibres creuses unidirectionnelles et d'une unité de mise en circulation de fluide caloporteur.
La figure 8 est une vue partielle schématique, en perspective, d'un mode de réalisation particulier d'une structure composite pourvue d'une pluralité de couches de fibres creuses unidirectionnelles et d'une unité de mise en circulation de fluide caloporteur.
La figure 9 est une vue partielle schématique, en perspective, d'un mode de réalisation particulier d'une structure composite pourvue d'un unique serpentin et d'une unité de mise en circulation de fluide caloporteur.
La figure 10 est une vue partielle schématique, en perspective, d'un mode de réalisation particulier d'une structure composite pourvue d'une pluralité de serpentins, dont chacun passe dans différentes couches de la structure composite, et d'une unité de mise en circulation de fluide caloporteur.
La figure 11 est une vue partielle schématique, en perspective, d'un mode de réalisation particulier d'une structure composite pourvue d'une couche de fibres creuses unidirectionnelles et d'une unité de génération de vide.

### Description détaillée

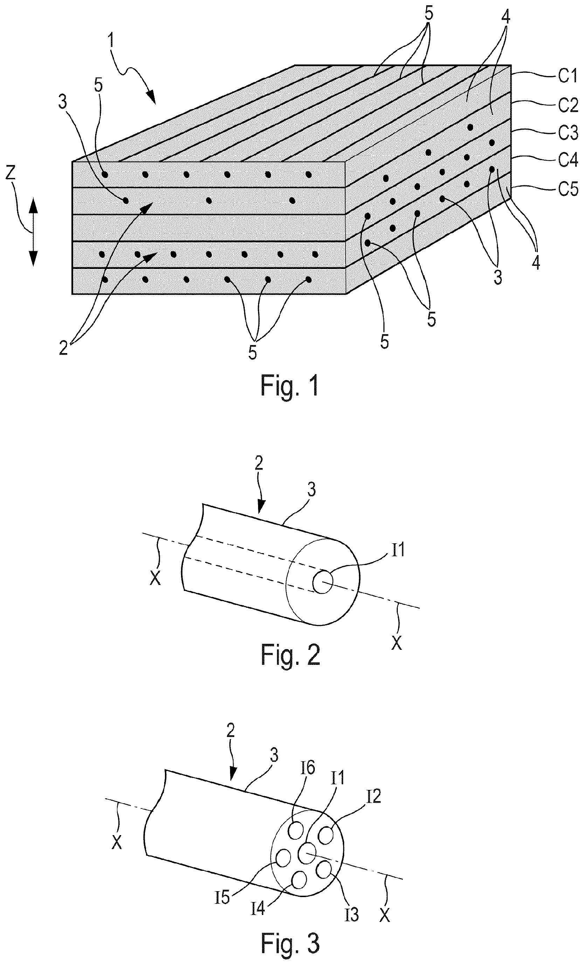

La structure composite 1 représentée schématiquement dans un mode de réalisation particulier sur la figure 1 et permettant d'illustrer l'invention est une structure réalisée en un matériau composite, de préférence multicouches.

Bien que non exclusivement, la structure composite 1 est particulièrement appropriée à servir, au moins en partie, de paroi d'un réservoir à hydrogène liquide.

Un tel réservoir à hydrogène liquide est notamment adapté pour équiper un engin mobile fonctionnant, au moins partiellement, à l'hydrogène. De manière préférée, le réservoir est destiné à équiper un aéronef, en particulier un avion de transport.

Dans l'exemple de la figure 1, la structure composite 1 comprend une pluralité de couches C1 à C5 superposées.

Selon l'invention, la structure composite 1 comprend également un dispositif de protection thermique 2.

De plus, ce dispositif de protection thermique 2 comporte une ou plusieurs fibres creuses 3, selon le mode de réalisation envisagé.

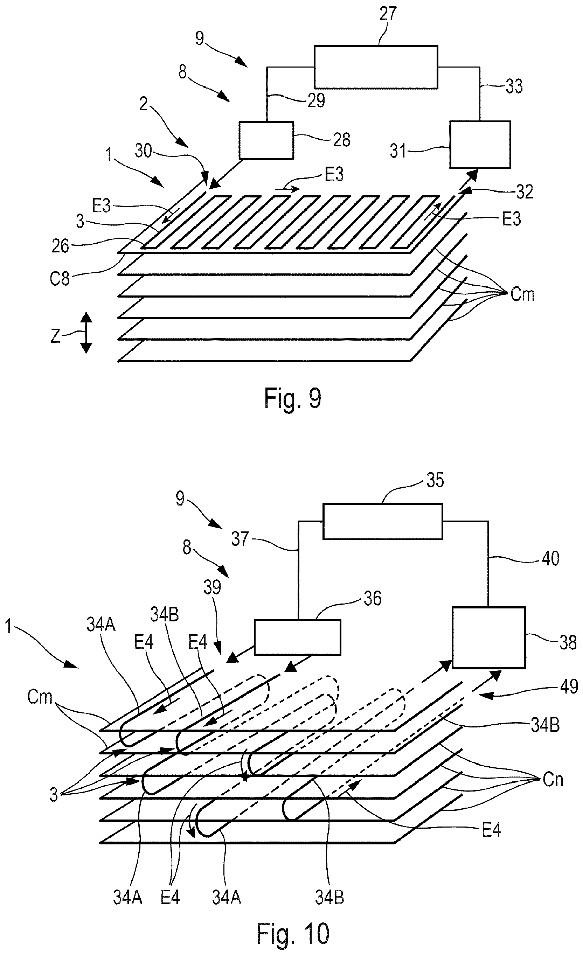

De préférence, le dispositif de protection thermique 2 comporte une pluralité de fibres creuses 3. Dans la description suivante, on considère que le dispositif de protection thermique 2 comprend une pluralité de fibres creuses, excepté pour le mode de réalisation particulier de la figure 9 qui comprend une seule fibre creuse, comme précisé ci-dessous.

Dans le cadre de la présente invention, on entend par « fibre creuse » une fibre 3 pourvue d'au moins un canal interne longitudinal creux, c'est-à-dire d'un canal formé à l'intérieur de la matière de la fibre, de façon longitudinale (c'est-à-dire qui s'étend le long de la fibre). Généralement, le canal interne débouche à l'extérieur de la fibre uniquement aux deux extrémités longitudinales de cette dernière.

Selon un premier mode de réalisation, une fibre creuse 3 peut comporter un seul canal interne I1, comme représenté sur la figure 2. Ce canal interne I1 peut, par exemple, être sensiblement coaxial à un axe longitudinal X-X de la fibre creuse 3, comme dans l'exemple de la figure 2 où le canal interne I1 est représenté en tirets. Le canal interne peut également être positionné différemment dans la section transversale de la fibre, notamment de manière quelconque.

Selon un second mode de réalisation, une fibre creuse 3 peut comporter une pluralité de canaux internes 11, I2, I3, I4, I5 et I6, comme représenté sur la figure 3. Dans l'exemple de la figure 3, le canal interne I1 est sensiblement coaxial à l'axe longitudinal X-X de la fibre creuse 3, et les canaux internes I2 à I6 sont réparties autour du canal interne I1 dans la matière de la fibre. Bien entendu, tout positionnement des différents canaux internes dans la section transversale de la fibre creuse est envisageable. De plus, le nombre de canaux internes est variable et peut, par exemple, être compris entre 2 et 10.

Les fibres creuses 3 peuvent être agencées dans la structure composite 1, de façon sensiblement rectiligne (selon l'axe longitudinal X-X), de façon courbe, ou de façon quelconque.

Dans le cadre de la présente invention, les fibres creuses 3 peuvent être réalisées en différentes matières. De préférence, elles sont réalisées de manière usuelle, comme les fibres usuelles d'un matériau composite, et par exemple dans la même matière que des fibres pleines utilisées par ailleurs dans la structure composite 1.

Dans un premier mode de réalisation, les fibres creuses 3 du dispositif de protection thermique 2 sont des fibres de carbone. De telles fibres de carbone sont réalisées à partir d'un procédé de fabrication usuel connu, non décrit davantage.

Les fibres creuses de carbone présentent, de plus, l'avantage d'être imperméable à l'hydrogène, ce qui présente un intérêt supplémentaire dans l'application à un réservoir à hydrogène liquide, comme précisé ci-dessous.

En outre, dans un deuxième mode de réalisation, les fibres creuses 3 du dispositif de protection thermique 2 sont des fibres végétales, telles que par exemple des fibres de bambou ou des fibres de lin.

Par ailleurs, dans un troisième mode de réalisation, les fibres creuses 3 du dispositif de protection thermique 2 correspondent à l'un des types de fibre suivants :
- des fibres de verre ;
- des fibres thermoplastiques (polyamide, polypropylène, ...) ;
- des fibres de céramique.

Dans le cadre de la présente invention, les fibres creuses 3 peuvent, en particulier, être :
- des fibres longues, c'est-à-dire qui présentent une longueur égale à la longueur de la structure composite dans une direction donnée ; ou
- des fibres courtes qui sont plus courtes que la longueur de la structure composite dans la direction dans laquelle elles sont agencées.

Dans le cadre de la présente invention, la ou les fibres creuses 3, en plus de pouvoir présenter des formes, des tailles et des nombres différents et variés, peuvent être agencées de différentes manières et à différents endroits de la structure composite 1.

On précise, ci-après, à titre d'illustration non limitative, différents modes de réalisation d'une structure composite 1, en référence aux figures 1, 5 et 6.

Dans un premier mode de réalisation représenté sur la figure 1, la structure composite 1 comprend une pluralité de couches C1 à C5 superposées. Les couches C1 à C5 sont superposées les unes sur les autres selon une direction verticale Z. Chacune de ces couches C1 à C5 comprend des fibres 3, 5 unidirectionnelles. On entend par « fibres unidirectionnelles » le fait que les fibres considérées, par exemple les fibres d'une couche de la structure composite, sont toutes agencées dans une seule et même direction.

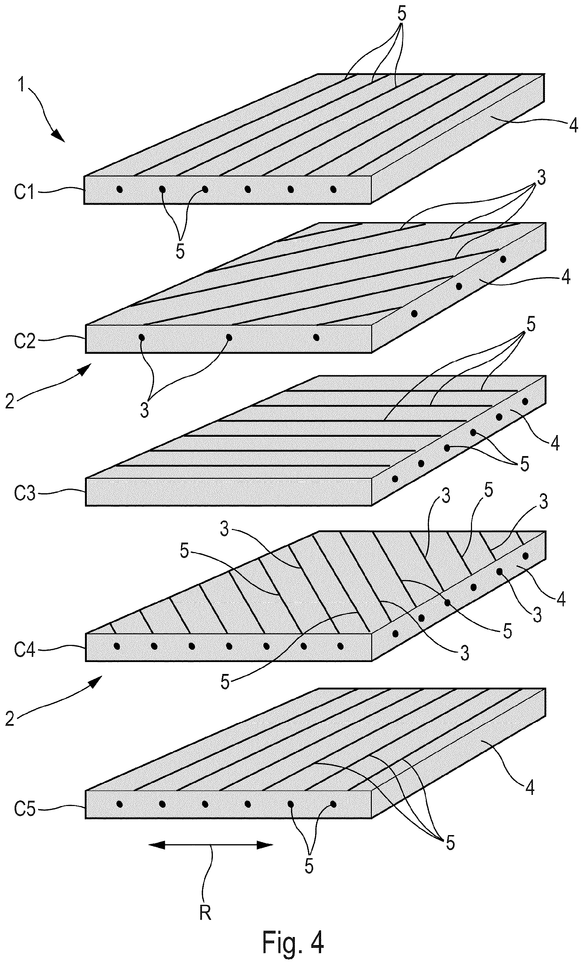

Ces fibres unidirectionnelles sont noyées dans une matrice polymère 4 usuelle, comme représenté par un fond grisé sur les figures 1 et 4. Cette matrice polymère 4 est, par exemple, réalisée en cellulose ou en acide polylactique.

Pour faciliter la description de la structure composite 1 de la figure 1, on a représenté, sur la figure 4, les couches de la structure composite 1 (de cette figure1) de manière éclatée, en écartant verticalement les couches les unes des autres. Sur cette figure 4, on a représenté une flèche R illustrant une direction de référence. Dans l'exemple de la figure 1 :
- les fibres unidirectionnelles (fibres pleines 5) de la couche C1 sont orientées selon une direction présentant un angle de 90° par rapport à la direction illustrée par la flèche R ;
- les fibres unidirectionnelles (fibres creuses 3) de la couche C2 sont orientées selon une direction présentant un angle de 45° par rapport à la direction illustrée par la flèche R ;
- les fibres unidirectionnelles (fibres pleines 5) de la couche C3 sont orientées selon la direction illustrée par la flèche R ;
- les fibres unidirectionnelles (fibres creuses 3 et fibres pleines 5) de la couche C4 sont orientées selon une direction présentant un angle de 135° par rapport à la direction illustrée par la flèche R ; et
- les fibres unidirectionnelles (fibres pleines 5) de la couche C5 sont orientées selon une direction présentant un angle de 90° par rapport à la direction illustrée par la flèche R.

Bien entendu, en variante, les orientations peuvent prendre des directions différentes à celles de la figure 1, et notamment des directions quelconques.

Dans cet exemple, certaines des fibres de la structure composite 1 sont des fibres creuses 3 et d'autres fibres de la structure composite 1 sont des fibres pleines 5 usuelles. A titre d'exemple, les fibres des couches C2 sont des fibres creuses 3 et les fibres des couches C1, C3 et C5 sont des fibres pleines 5 usuelles.

Dans le cadre de la présente invention, on entend par « fibre pleine » toute fibre habituellement utilisée dans les matériaux composites, avec de la matière dans toute sa section transversale, c'est-à-dire une fibre non pourvue de canal interne creux. Ces fibres pleines usuelles ne sont pas décrites davantage dans la présente description.

On peut également envisager d'agencer des fibres mixtes dans une couche, c'est-à-dire d'agencer dans une même couche à la fois des fibres creuses 3 et des fibres pleines 5 usuelles, comme dans la couche C4. Dans l'exemple de cette couche C4, les fibres sont alternativement des fibres creuses 3 et des fibres pleines 5. Bien entendu, d'autres répartitions entre les fibres creuses et les fibres mixtes sont possibles, et notamment une répartition quelconque.

Dans une variante de ce premier mode de réalisation, la structure composite comprend une seule couche composite, par exemple une couche similaire à la couche C4.

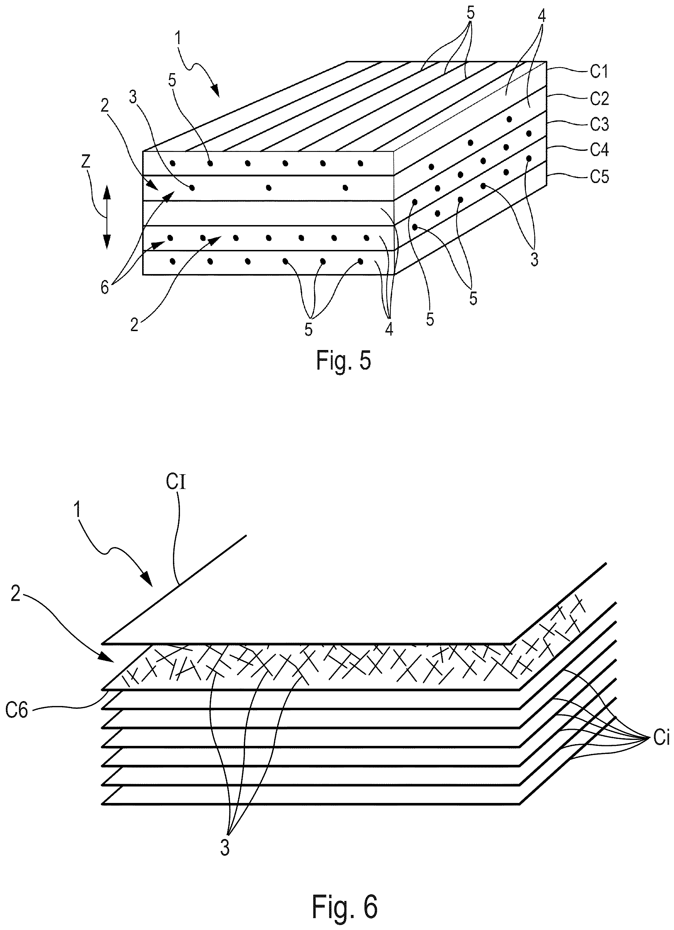

En outre, dans un deuxième mode de réalisation représenté sur la figure 5, la structure composite 1 comprend également une pluralité de couche C1 à C5 comprenant des fibres unidirectionnelles.

Toutefois, à la différence de la structure composite 1 du premier mode de réalisation représenté sur la figure 1, la structure composite 1 de la figure 5 ne comprend pas de matrice polymère. Dans ce deuxième mode de réalisation, les fibres 3 et 5 ne sont pas noyées dans une matrice.

Les mêmes types de variantes que celles indiquées ci-dessus pour le premier mode de réalisation, par exemple des fibres unidirectionnelles de directions variées ou différentes combinaisons de fibres creuses et de fibres pleines au niveau d'une même couche ou au niveau de couches différentes, sont envisageables pour ce deuxième mode de réalisation.

Quel que soit le mode de réalisation envisagé, chacune des couches (ou pli), qui présente par exemple une épaisseur comprise entre 60 µm et 100 µm, peut comprendre plusieurs empilements de fibres dans son épaisseur. A titre d'exemple, une couche de 70 µm d'épaisseur peut comprendre un empilement maximal de sept fibres de 10 µm de diamètre dans son épaisseur. Des fibres de plus petits diamètres, comprenant par exemple un nombre réduit de canaux internes, peuvent permettre un empilement plus important de fibres dans une même couche.

Par ailleurs, dans un troisième mode de réalisation représenté sur la figure 6, la structure composite 1 est une structure comprenant une ou plusieurs couches constituées de fibres creuses 3 qui sont courtes. Dans l'exemple de la figure 6, la structure composite 1 comprend :
- une pluralité de couches Ci successives usuelles qui sont superposées. Ces couches Ci usuelles peuvent, par exemple, comprendre des fibres pleines usuelles noyées dans une résine polymère ; et
- une couche C6 qui est agencée sur l'ensemble de couches Ci successives. Cette couche C6 comprend des fibres creuses 3 courtes.

Dans une réalisation préférée de ce troisième mode de réalisation, les fibres creuses 3 courtes de la couche C6 sont disposées aléatoirement et elles sont maintenues entre elles par un liant thermoplastique ou thermodurcissable. Ainsi, des interstices sont naturellement créés dans la couche C6 entre ces fibres creuses 3 courtes. Une telle réalisation permet la circulation d'un fluide (gaz neutre, air, fluide caloporteur) dans les fibres creuses 3, ainsi qu'au travers des interstices ainsi créés, ou le maintien sous vide des fibres creuses et des interstices ainsi créés.

Cette réalisation permet, par conséquent, de former une couche C6 qui est perméable à un fluide et peut être utilisée pour le passage d'un fluide caloporteur dans un mode de réalisation particulier, tel que précisé ci-dessous.

Dans l'exemple de la figure 6, la couche C6 comprend uniquement des fibres courtes creuses. Dans une variante (non représentée), la couche C6 peut comprendre, comme fibres courtes, à la fois des fibres creuses et des fibres pleines usuelles.

Dans une autre variante de ce troisième mode de réalisation, la structure composite peut comporter plusieurs couches de fibres creuses, telles que la couche C6.

Dans le mode de réalisation de la figure 6, la structure composite 1 est également pourvue d'une couche imperméable CI agencée sur une face externe de la structure composite 1.

Par ailleurs, il est également envisageable de créer une couche perméable qui est obtenue à partir de fibres creuses (et éventuellement de fibres pleines) qui sont tissées, de façon usuelle.

Dans le cadre de la présente invention, la ou les fibres creuses peuvent donc être agencées de différentes manières et à différents endroits de la structure composite 1, comme illustrée notamment de façon non limitative sur les exemples précédents des figures 1, 5 et 6. Bien entendu, des combinaisons variées de différentes caractéristiques présentées ci-dessus peuvent également être envisagées. En particulier, on peut prévoir une structure composite qui comprend au moins deux zones, dont chacune comprend les caractéristiques d'un mode de réalisation particulier.

La structure composite 1 bénéficie ainsi des avantages d'un matériau composite, notamment en termes de masse par exemple par rapport à un matériau métallique.

De plus, grâce au dispositif de protection thermique 2, la structure composite 1 permet de bénéficier, en outre, d'un gain de masse important dû à l'utilisation de fibres creuses par rapport à une utilisation de fibres pleines. Les fibres creuses, de carbone par exemple, peuvent générer un gain de masse de l'ordre de 50%, et jusqu'à 65% au niveau de la structure composite 1.

En effet, à titre d'illustration, dans le cas d'une structure composite de fibres creuses en carbone noyées dans une résine, avec une densité des fibres de carbone de l'ordre de 1,7 g/cm3, une densité de la résine de l'ordre de 1,1 g/cm3, et des fibres représentant 60% du volume dans une couche avec 40% de creux au sein de chaque fibre de carbone, on peut obtenir de tels gains de masse importants.

Dans le cadre de la présente invention, les fibres creuses (qui peuvent donc présenter des caractéristiques variées et être agencées de différentes manières comme précisé ci-dessus) peuvent également être utilisées de différentes manières, notamment en fonction des performances recherchées et des applications envisagées.

Dans un premier mode de réalisation simplifié, les fibres creuses 3 sont simplement remplies de gaz, en particulier d'air. Dans une variante de réalisation, elles sont remplies d'un gaz neutre.

Le dispositif de protection thermique 2 correspond, dans ce premier mode de réalisation, à une barrière thermique 6 (figure 5) qui permet de limiter les échanges thermiques par l'intermédiaire des canaux internes des fibres creuses 3 (qui sont de plus de préférence étanches à l'hydrogène, par nature dans le cas notamment du carbone, ou via une protection spécifique si une telle protection est prévue). Les fibres creuses 3 permettent de réduire la conductivité thermique de la pièce composite 1 en raison d'une conductivité thermique moindre des fibres creuses par rapport à des fibres pleines usuelles.

Ce premier mode de réalisation peut s'appliquer aux différentes réalisations possibles de couches composites pourvues de fibres creuses, et notamment à celles des figures 1, 5 et 6 et aux variantes correspondantes décrites.

A titre d'illustration, le dispositif de protection thermique 2 de la structure composite 1 de la figure 5 comprend une telle barrière thermique 6. Plus précisément, la couche C4 dont les fibres creuses 3 sont pourvues dans cet exemple d'un gaz, présente une conductivité thermique réduite, par rapport aux autres couches usuelles de la structure composite 1, et constitue ainsi une barrière thermique 6 entre les couches C3 et C5 entre lesquelles elle est agencée. La structure composite 1 intègre ainsi une barrière thermique qui permet de limiter la transmission thermique.

Dans ce premier mode de réalisation, il est également envisageable, au lieu d'introduire un gaz (tel que l'air ou un gaz neutre) dans les fibres creuses 3, de créer un vide dans les canaux internes des fibres creuses 3 et de maintenir ce vide en fermant les extrémités longitudinales de ces canaux internes. Un tel vide permet de limiter la conductivité thermique.

Au lieu d'être un dispositif de protection thermique de type passif (générant une barrière thermique), le dispositif de protection thermique peut également être actif ou dynamique. Un tel dispositif de protection thermique actif ou dynamique peut être configuré pour générer une circulation d'un fluide (gaz neutre, air, fluide caloporteur) dans les fibres creuses 3 et notamment correspondre à un échangeur thermique ou pour créer un vide dans les fibres creuses, comme précisé ci-dessous.

Par ailleurs, dans un deuxième mode de réalisation, le dispositif de protection thermique 2 est configuré pour faire circuler un fluide caloporteur dans les fibres creuses 3. Pour ce faire, le dispositif de protection thermique 2 qui correspond à un échangeur thermique 8 comprend, de plus, une unité d'alimentation 9 configurée pour mettre en circulation le fluide caloporteur dans lesdites fibres creuses 3. Dans un deuxième mode de réalisation, le dispositif de protection thermique 2 est donc un dispositif de type actif ou dynamique.

Différentes réalisations peuvent être envisagées.

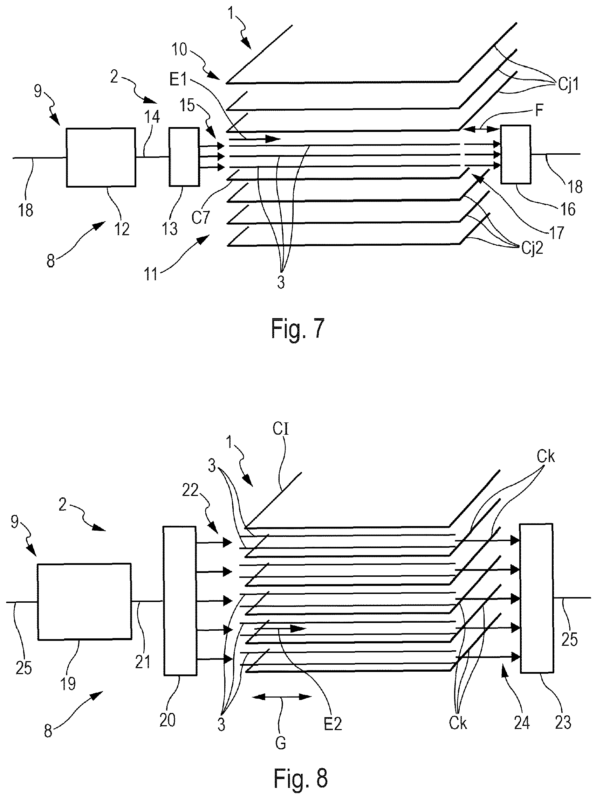

A titre d'illustration, dans une première réalisation (de ce deuxième mode de réalisation) représentée sur la figure 7, la structure composite 1 comprend un ensemble 10 de couche Cj1 usuelles pourvues de fibres pleines (non représentées) et un ensemble 11 de couche Cj2 usuelles pourvues de fibres pleines (non représentées), ainsi qu'une couche C7 agencée entre les deux ensembles 10 et 11. Cette couche C7 est pourvue de fibres creuses 3 unidirectionnelles, orientées selon une (même) direction illustrée par une double flèche F.

L'ensemble 10 de couches Cj1 forme par exemple un premier stratifié et l'ensemble 11 de couches Cj2 forme un second stratifié. La couche C7 est donc agencée entre ces premier et second stratifiés.

Dans cette première réalisation, l'unité d'alimentation 9 comprend :
- un dispositif de mise en circulation 12 configuré pour mettre en circulation du fluide caloporteur, notamment à une température souhaitée ;
- une unité d'interface 13 configurée pour faire entrer le fluide caloporteur (mis en circulation par le dispositif de mise en circulation 12 et reçue par l'intermédiaire d'une conduite 14), à une extrémité amont 15 (par rapport au sens E1 de circulation du fluide caloporteur dans les fibres creuses 3 de la couche C7) de la structure composite 1, dans l'ensemble des canaux internes des fibres creuses 3 de la couche C7 ; et
- une unité d'interface 16 configurée pour récupérer l'ensemble des fluides caloporteurs à la sortie des canaux internes des fibres creuses 3 à une extrémité aval 17 de la structure composite 1 et les ramener au dispositif de mise en circulation 12 par l'intermédiaire d'une conduite 18.

En outre, dans une seconde réalisation (de ce deuxième mode de réalisation) représentée sur la figure 8, la structure composite 1 comprend une pluralité de couches Ck comprenant chacune des fibres creuses 3 unidirectionnelles, agencées dans une seule et même direction, illustrée par une flèche G.

Dans cette seconde réalisation, l'unité d'alimentation 9 du dispositif de protection thermique 2 (qui correspond à un échangeur thermique 8) comporte :
- un dispositif de mise en circulation 19, identique par exemple au dispositif de mise en circulation 12, qui est configuré pour mettre en circulation du fluide caloporteur notamment à une température souhaitée ;
- une unité d'interface 20 configurée pour faire entrer le fluide caloporteur (mis en circulation par le dispositif de mise en circulation 19 et reçue par l'intermédiaire d'une conduite 21), à une extrémité amont 22 (par rapport au sens E2 de circulation du fluide caloporteur dans le fibres creuses 3 des couches Ck) de la structure composite 1, dans l'ensemble des canaux internes des fibres creuses 3 des couches Ck ; et
- une unité d'interface 23 configurée pour récupérer l'ensemble des fluides caloporteurs à la sortie des canaux internes des fibres creuses 3 à une extrémité aval 24 de la structure composite 1 et les ramener au dispositif de mise en circulation 19 par l'intermédiaire d'une conduite 25.

Dans le mode de réalisation de la figure 8, la structure composite 1 est également pourvue d'une couche imperméable CI agencée sur une face externe de la structure composite 1.

Dans les première et seconde réalisations de ce deuxième mode de réalisation, le dispositif de protection thermique 2 comprend une pluralité de fibres creuses 3 réalisées sous forme de fibres longues qui présentent sensiblement la longueur de la couche dans laquelle elles sont agencées.

Dans ce deuxième mode de réalisation (relatif à une mise en circulation de fluide caloporteur), il est également envisageable d'utiliser une ou plusieurs fibres creuses plus longues qui sont agencées sous forme de serpentins. À titre d'illustration, on présente, ci-après, différents exemples sous forme d'une troisième réalisation représentée sur la figure 9 et d'une quatrième réalisation représentée sur la figure 10.

Dans la troisième réalisation de la figure 9, le dispositif de protection thermique 2 comporte une seule fibre creuse 3 agencée sous la forme d'un serpentin 26 sur une couche C8 externe de la structure composite 1. La structure composite 1 comporte également un ensemble de couches Cm superposées successives (selon une direction verticale Z) et la couche C8 est agencée sur cet ensemble de couches Cm superposées.

Dans cette troisième réalisation, l'unité d'alimentation 9 du dispositif de protection thermique 2 (qui correspond à un échangeur thermique 8) comporte :
- un dispositif de mise en circulation 27 configuré pour mettre en circulation du fluide caloporteur à la température souhaitée ;
- une unité d'interface 28 configurée pour faire entrer le fluide caloporteur (mis en circulation par le dispositif de mise en circulation 27 et reçue par l'intermédiaire d'une conduite 29), dans le ou les canaux internes de la fibre creuse 3 formant le serpentin 26, à une extrémité amont 30 du serpentin 26 (dans le sens E3 d'écoulement du fluide caloporteur) ; et
- une unité d'interface 31 configurée pour récupérer le fluide caloporteur à la sortie du ou des canaux internes de la fibre creuse 3 formant le serpentin 26, à une extrémité aval 32 (dans le sens E3 d'écoulement du fluide caloporteur), et le ramener au dispositif de mise en circulation 27 par l'intermédiaire d'une conduite 33.

En outre, dans la quatrième réalisation de la figure 10, la structure composite 1 comprend une pluralité de couches Cn superposées successives formant par exemple un stratifié et le dispositif de protection thermique 2 comporte une pluralité de fibres creuses 3, dont chacune est réalisée sous la forme d'un serpentin 34A, 34B dans la structure composite 1. Sur la figure 10, on a uniquement représenté, pour des raisons de clarté de la figure, deux serpentins 34A et 34B. Toutefois, le dispositif de protection thermique 2 peut comporter un nombre élevé de tels serpentins.

Chacun de ces serpentins 34A et 34B passe successivement (de façon continue) d'une couche à la couche suivante, et pour chacune des couches, il est agencé dans la couche.

Dans cette quatrième réalisation, l'unité d'alimentation 9 du dispositif de protection thermique 2 (qui correspond à un échangeur thermique 8) comporte :
- un dispositif de mise en circulation 35 configuré pour mettre en circulation du fluide caloporteur à la température souhaitée ;
- une unité d'interface 36 configurée pour faire entrer le fluide caloporteur (mis en circulation par le dispositif de mise en circulation 35 et reçue par l'intermédiaire d'une conduite 37), dans le ou les canaux internes de l'ensemble des fibres creuses 3 formant les serpentins 34A et 34B, à une extrémité amont 39 des serpentins 34A et 34B (dans le sens E4 d'écoulement du fluide caloporteur) ; et
- une unité d'interface 38 configurée pour récupérer le fluide caloporteur à la sortie du ou des canaux internes de l'ensemble des fibres creuses 3 formant les serpentins 34A et 34B, à une extrémité aval 49 des serpentins 34A et 34B (dans le sens E4 d'écoulement du fluide caloporteur) et le ramener au dispositif de mise en circulation 35 par l'intermédiaire d'une conduite 40.

Dans ce second mode de réalisation, et ceci quelles que soient les réalisations envisagées, la circulation de fluide caloporteur générée à l'intérieur de la structure composite 1 ou sur une face externe de la structure composite 1 permet d'évacuer de la chaleur et ainsi de limiter la valeur du gradient thermique supporté dans la structure composite 1

Par ailleurs, dans un troisième mode de réalisation, un vide est créé dans le ou les canaux internes des fibres creuses 3.

Dans ce troisième mode de réalisation, le dispositif de protection thermique 2 comprend, de plus, une unité de génération de vide 41 configurée pour générer et maintenir le vide dans les fibres creuses 3. Dans ce troisième mode de réalisation, le dispositif de protection thermique 2 qui est configuré pour maintenir le vide est donc de type actif.

Ce troisième mode de réalisation peut être appliqué à des structures composites similaires à celles décrites ci-dessus pour le deuxième mode de réalisation relatif à la mise en circulation d'un fluide caloporteur, en prévoyant notamment une unité de génération de vide au lieu d'une unité d'alimentation en fluide caloporteur.

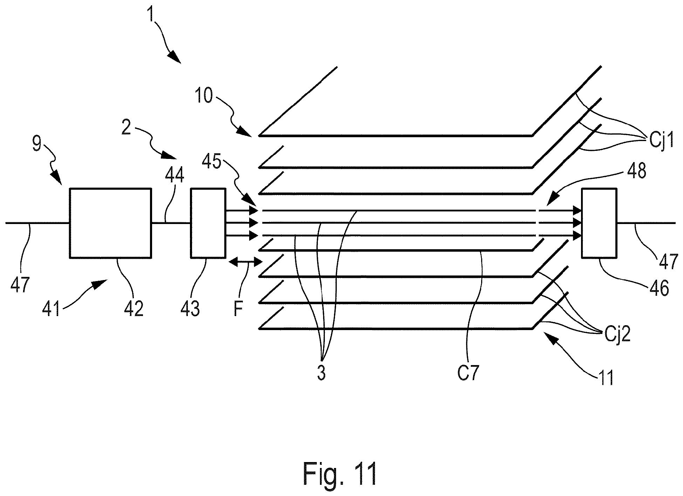

À titre d'illustration, on a représenté sur la figure 11, un exemple de réalisation de ce troisième mode de réalisation, qui s'applique à une structure similaire à celle de la figure 7.

La structure composite 1 comprend l'ensemble 10 de couche Cj1 usuelles pourvues de fibres pleines (non représentées) et l'ensemble 11 de couche Cj2 usuelles pourvues de fibres pleines (non représentées), ainsi que la couche C7 agencée entre les deux ensembles 10 et 11, qui est pourvue de fibres creuses 3 unidirectionnelles, orientées selon la direction illustrée par la flèche F.

L'ensemble 10 de couches Cj1 forme par exemple un premier stratifié et l'ensemble 11 de couches Cj2 forme un second stratifié. La couche C7 est donc agencée entre ces premier et second stratifiés.

Dans cet exemple, l'unité de génération de vide 41 comprend :
- un générateur de vide 42 ;
- une unité d'interface 43 configurée pour relier le générateur de vide 42 (via une conduite 44), à l'ensemble des canaux internes des fibres creuses 3 de la couche C7, à une première extrémité 45 de la structure composite 1 ; et
- une unité d'interface 46 configurée pour relier le générateur de vide 42 (via une conduite 47), à l'ensemble des canaux internes des fibres creuses de la couche C7, à une seconde extrémité 48 de la structure composite 1, opposée à la première extrémité 45.

La structure composite 1, telle que décrite ci-dessus, présente de nombreux avantages.

Tout d'abord, la structure composite 1 bénéficie du gain de masse inhérent à l'utilisation de fibres creuses 3 dans le dispositif de protection thermique 2.

De plus, ces fibres creuses 3 du dispositif de protection thermique 2 :
- présentent des propriétés de conductivité thermique abaissées par rapport à des fibres pleines ;
- peuvent servir de barrière d'échanges thermiques via leurs canaux internes (qui sont, de préférence, étanches à l'hydrogène) ; et
- peuvent être utilisées (via leurs canaux internes) comme voie de circulation de fluide caloporteur ou comme espace de génération de vide.

En outre, dans un mode de réalisation particulier avec une circulation de fluide caloporteur dans les canaux internes des fibres creuses 3, les fibres creuses 3 :
- apportent une protection thermique des couches composites sous-jacentes avec une diminution escomptée de la fissuration transverse en lien avec les dilatations thermiques différentielles ;
- apportent une isolation, via le fluide caloporteur, aux endroits souhaités ; et
- permettent de remplir d'autres fonctions telles que la génération d'une polarité adaptée par exemple.

Par ailleurs, dans l'application préférée à un réservoir à hydrogène liquide, dans laquelle au moins une partie de la paroi du réservoir comprend une structure composite 1 telle que précitée, le dispositif de protection thermique 2 de la structure composite 1 participe à la tenue mécanique de la paroi, crée une barrière à l'hydrogène et permet de minimiser l'évaporation de l'hydrogène liquide.

Plus précisément, la structure composite 1, servant de paroi du réservoir utilisé à des températures de fonctionnement cryogénique, présente un gain de masse par rapport à une solution usuelle, métallique par exemple. Ce composite structural permet de créer un isolant thermique et de minimiser le taux de fuite d'hydrogène liquide et gazeux en présence d'endommagement de la paroi.

La minimisation de l'évaporation de l'hydrogène peut notamment être obtenue par un échangeur thermique basé sur la circulation de fluide caloporteur dans les fibres creuses de la structure composite 1.

Dans cette application à une paroi d'un réservoir à hydrogène liquide, la face interne de la paroi est exposée à l'hydrogène liquide à -253°C et la face externe de la paroi est exposée à la température ambiante. Le flux entrant dans le réservoir doit donc être minimisé pour réduire l'évaporation de l'hydrogène liquide. Avec le dispositif de protection thermique 2, il est envisageable d'obtenir :
- une réduction de 5% du flux entrant avec un fluide, par exemple de l'air, circulant dans les fibres creuses ;
- une réduction entre 5 et 80% du flux entrant avec un fluide caloporteur froid circulant dans les fibres creuses ; et
- une réduction de 80% du flux entrant par la génération d'un vide dans les fibres creuses.

L'utilisation de fibres creuses, par exemple de carbone, permet par conséquent de combiner :
- un gain de masse de l'ordre de 50%, et même de l'ordre de 65% au niveau de la structure composite 1 ;
- une isolation thermique ; et
- une diminution du gradient de dilatation thermique, vu par chaque couche de la structure composite, permettant de réduire le niveau de sollicitation thermomécanique vue par chaque micro couche de fibres ainsi qu'une diminution du cisaillement thermomécanique entre des couches d'orientations différentes. En conséquence, la fissuration transverse dans les couches les plus éloignées de la couche en contact avec l'hydrogène liquide, est très diminuée.

## Revendications

1. Structure composite, en particulier pour une paroi d'un réservoir à hydrogène liquide,
**caractérisée en ce qu'**elle comprend au moins un dispositif de protection thermique (2) correspondant à l'un des éléments suivants : un échangeur thermique (8), une barrière thermique (6), et **en ce que** ledit dispositif de protection thermique (2) comporte une ou plusieurs fibres creuses (3).

2. Structure composite selon la revendication 1,
**caractérisée en ce qu'**au moins certaines des fibres creuses (3) du dispositif de protection thermique (2) comprennent une pluralité de canaux internes (I1 à I6) longitudinaux.

3. Structure composite selon l'une des revendications 1 et 2,
**caractérisée en ce qu'**au moins certaines des fibres creuses (3) du dispositif de protection thermique (2) correspondent à l'un des types de fibre suivants :
- des fibres de carbone ;
- des fibres de verre ;
- des fibres thermoplastiques ;
- des fibres de céramique ;
- des fibres végétales.

4. Structure composite selon l'une quelconque des revendications précédentes,
**caractérisée en ce qu'**au moins certaines des fibres creuses (3) du dispositif de protection thermique (2) sont des fibres courtes.

5. Structure composite selon l'une quelconque des revendications précédentes,
**caractérisée en ce qu'**au moins certaines des fibres creuses (3) du dispositif de protection thermique (2) sont intégrées dans une matrice (4) polymère.

6. Structure composite selon l'une quelconque des revendications précédentes,
**caractérisée en ce qu'**elle comporte au moins une couche (C4) pourvue de fibres creuses (3) du dispositif de protection thermique (2) et de fibres pleines (5).

7. Structure composite selon l'une quelconque des revendications précédentes,
**caractérisée en ce qu'**elle comporte une pluralité de couches superposées, et **en ce qu'**au moins certaines desdites fibres creuses (3) du dispositif de protection thermique (2) sont agencées dans au moins l'une desdites couches.

8. Structure composite selon l'une quelconque des revendications précédentes,
**caractérisée en ce qu'**elle comporte une pluralité de couches superposées, et **en ce qu'**au moins certaines desdites fibres creuses (3) du dispositif de protection thermique (2) sont agencées entre deux couches superposées directement successives.

9. Structure composite selon l'une quelconque des revendications précédentes,
**caractérisée en ce qu'**au moins l'une des fibres creuses (3) du dispositif de protection thermique (2) est agencée sur une couche externe (C8) de la structure composite (1).

10. Structure composite selon l'une quelconque des revendications précédentes,
**caractérisée en ce qu'**au moins l'une des fibres creuses (3) du dispositif de protection thermique (2) est réalisée sous forme de serpentin (26, 34A, 34B).

11. Structure composite selon l'une quelconque des revendications précédentes,
**caractérisée en ce qu'**au moins certaines des fibres creuses (3) du dispositif de protection thermique (2) sont remplies de gaz.

12. Structure composite selon l'une quelconque des revendications précédentes,
**caractérisée en ce qu'**au moins certaines des fibres creuses (3) du dispositif de protection thermique (2) sont traversées par un fluide caloporteur et **en ce que** le dispositif de protection thermique (2) comprend au moins une unité d'alimentation (9) configurée pour mettre en circulation le fluide caloporteur dans lesdites fibres creuses (3).

13. Structure composite selon l'une quelconque des revendications précédentes,
**caractérisée en ce qu'**au moins certaines des fibres creuses (3) du dispositif de protection thermique (2) sont mises sous vide et **en ce que** le dispositif de protection thermique (2) comprend au moins une unité de génération de vide (41) configurée pour générer le vide dans lesdites fibres creuses (3).

14. Structure composite selon l'une quelconque des revendications précédentes,
**caractérisée en ce qu'**au moins certaines des fibres creuses (3) du dispositif de protection thermique (2) comprennent un revêtement externe étanche à l'hydrogène.

15. Réservoir à hydrogène liquide,
**caractérisé en ce qu'**il comporte au moins une partie de paroi qui est pourvue d'une structure composite (1) selon l'une quelconque des revendications 1 à 14.
